# EUROPEAN PATENT APPLICATION

(11) **EP 4 428 011 A1**
(43) Date of publication of application: **11.09.2024**
(21) Application number: 24161623.4
(22) Date of filing: 05.03.2024
(51) Int. Cl.: B62D 21/02, B60K 1/04

(54) **COMMERCIAL ELECTRIC TRUCK CHASSIS WITH ISOLATED BATTERY MOUNTING WITHIN THE FRAME RAILS**

(30) Priority: 06.03.2023 US 202363450187 P
(71) Applicant: Bollinger Motors Inc., Oak Park, MI 48237 (US)
(72) Inventor: Connor, Kehoe, Ferndale, 48220 (US); Yassine, Ali M., Dearborn, 48126 (US)
(74) Representative: IP Maison

(57) **Abstract**

A unitary (one-piece) construction of an electric vehicle chassis (100;200) is provided having at least one s-bend (102;202) aft of the front axle to allow battery packs (108) to mount on isolators inside of the frame rails. The overall width of the frame (100;200) at the widest point is 10.16-15.24cm (4-6") wider as compared to traditional (non-ev) vehicles. This increased width is provided for to accommodate the battery packs required for operation of the electric vehicle. The s-bend (102;202) allows for front wheel steering angles greater than if rails were straight. In some embodiments, a second s-bend (204) directs the frame again outwards to accommodate additional components and to increase strength of the overall frame. The present wide and s-bend configuration allows for mounting of rear springs underneath of the frame rails for extra support and more efficient and improved packaging. The cross member further allows for front spring mounting to the frame.

## Description

### CROSS REFERENCE TO RELATED APPLICATIONS

This application claims priority to 63/450,187, filed on March 6, 2023, which is expressly incorporated by reference herein for all purposes.

### TECHNICAL FIELD

The present specification generally relates a chassis and, more specifically, to a electric vehicle chassis with isolated battery mounting within frame rails.

### BACKGROUND

Body-on-frame, also known as ladder frame construction, is a common motor vehicle construction method, whereby a separate body or coach is mounted on a strong and relatively rigid vehicle frame or chassis that carries the powertrain (the engine and drivetrain) and to which the wheels and their suspension, brakes, and steering are mounted. While this was the original method of building automobiles, body-on-frame construction is now used mainly for heavy trucks, pickups, and predominantly large SUVs. However, these previously known chassis ladder frame construction does not adequately provide for mounting of batteries used in electric vehicles.

Accordingly, there exists a need in the art to provide an improved chassis system for mounting of batteries powering electric vehicles overcoming the aforementioned disadvantages.

### SUMMARY

The unitary (one-piece) construction of an electric vehicle chassis is provided having at least one s-bend aft of the front axle to allow battery packs to mount on isolators inside of the frame rails. The overall width of the frame (at it's widest) is 4-6" wider as compared to traditional (non-ev) vehicles. This increased width is provided for to accommodate the battery packs required for operation of the electric vehicle. The s-bend allows for front wheel steering angles greater than if rails were straight. In some embodiments, a second s-bend directs the frame again outwards to accommodate additional components and to increase strength of the overall frame. The present wide and s-bend configuration allows for mounting of rear springs underneath of the frame rails for extra support and more efficient and improved packaging. The cross member further allows for front spring mounting to the frame.

A unitary electric vehicle chassis having at least one s-bend aft of a front axle, frame rails configured to accommodate battery packs mounted on isolators inside the frame rails, an overall width of the frame, at its widest, being 4-6 inches wider than traditional non-electric vehicle frames where said s-bend allowing for front wheel steering angles greater than if rails were straight. In some embodiments, a second s-bend directing the frame outward to accommodate additional components and to increase the strength of the overall frame. In some embodiments, said second s-bend is positioned aft of said first s-bend. In some embodiments, the increased width of the frame facilitates the accommodation of battery packs required for operation of the electric vehicle. In some embodiments, the frame further comprises mounting provisions for rear springs underneath the frame rails for extra support and improved packaging efficiency. In some embodiments, a cross member is provided for front spring mounting to the frame.

A method of manufacturing a unitary electric vehicle chassis including forming at least one s-bend aft of a front axle, configuring frame rails to accommodate battery packs mounted on isolators inside the frame rails, widening the overall width of the frame, at its widest, by 4-6 inches compared to traditional non-electric vehicle frames, incorporating said s-bend to allow for front wheel steering angles greater than if rails were straight. In some embodiments, forming a second s-bend directing the frame outward to accommodate additional components and to increase the strength of the overall frame. In some embodiments, said second s-bend is positioned aft of said first s-bend. In some embodiments, the method includes facilitating the accommodation of battery packs required for operation of the electric vehicle due to the increased width of the frame. In some embodiments, the method includes providing mounting provisions for rear springs underneath the frame rails for extra support and improved packaging efficiency. In some embodiments, in some embodiments, the method includes incorporating a cross member for front spring mounting to the frame.

### BRIEF DESCRIPTION OF THE DRAWINGS

The embodiments set forth in the drawings are illustrative and exemplary in nature and not intended to limit the subject matter. The following detailed description of the illustrative embodiments can be understood when read in conjunction with the following drawings, where like structure is indicated with like reference numerals and in which:
FIG. 1 depicts an evironmental perspective view of due s-bend on a vehicle according to one or more embodiments shown and described herein;
FIG. 2 depicts a plan view of a front frame with an s-bend illustrating the 50 deg steer angle according to one or more embodiments shown and described herein;
FIG. 3 depicts a perspective view of a front frame with an s-bend illustrating the 50 deg steer angle according to one or more embodiments shown and described herein;
FIG. 4 depicts a plan view of a full frame with an s-bend with spring and battery pack attached according to one or more embodiments shown and described herein;
FIG. 5 depicts a side view of a full frame with an s-bend with spring and battery pack attached according to one or more embodiments shown and described herein;
FIG. 6 depicts a perspective view of the rear spring undermount according to one or more embodiments shown and described herein;
FIG. 7 depicts a plan view of a full frame with an s-bend (and return s-bend) without attachments according to one or more embodiments shown and described herein; and
FIG. 8 depicts a perspective view of a full frame with an s-bend (and return s-bend) without attachments according to one or more embodiments shown and described herein.

### DETAILED DESCRIPTION

A unitary (one-piece) construction of an electric vehicle chassis is provided having at least one s-bend aft of the front axle to allow battery packs to mount on isolators inside of the frame rails. The overall width of the frame (at it's widest) is 4-6" wider as compared to traditional (non-ev) vehicles. This increased width is provided for to accommodate the battery packs required for operation of the electric vehicle. The s-bend allows for front wheel steering angles greater than if rails were straight. In some embodiments, a second s-bend directs the frame again outwards to accommodate additional components and to increase strength of the overall frame. The present wide and s-bend configuration allows for mounting of rear springs underneath of the frame rails for extra support and more efficient and improved packaging. The cross member further allows for front spring mounting to the frame.

The present commercial truck chassis is designed to allow batteries mounted inside of the frame rails and provide protection for said batteries that provide power to the electric motors while maintaining clearance for large steering angles at the front axle. While traditional ladder style truck frames are the closest prior art, the presently discloses system differs in that it includes an s-bent (and a return s-bend), is a one-piece unitary construction, allows an electric vehicle battery to mount between the rails (because of the wide width), and allows for the mounting of springs on the underside of the frame.

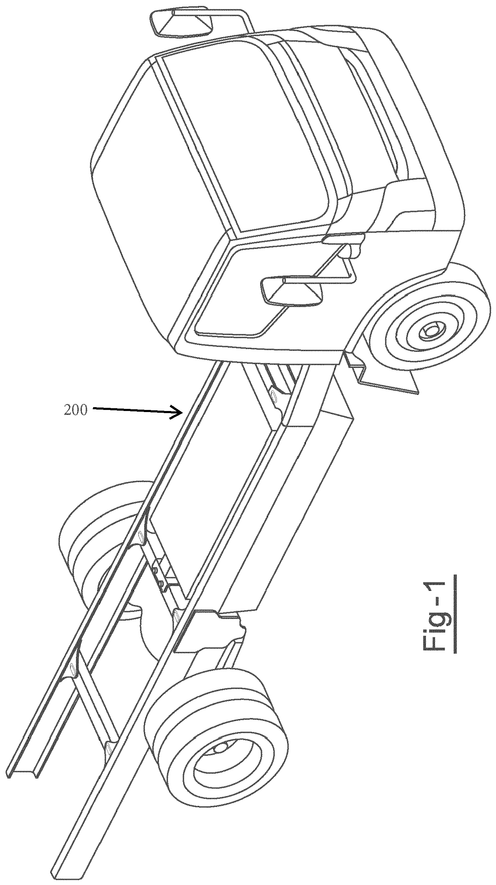

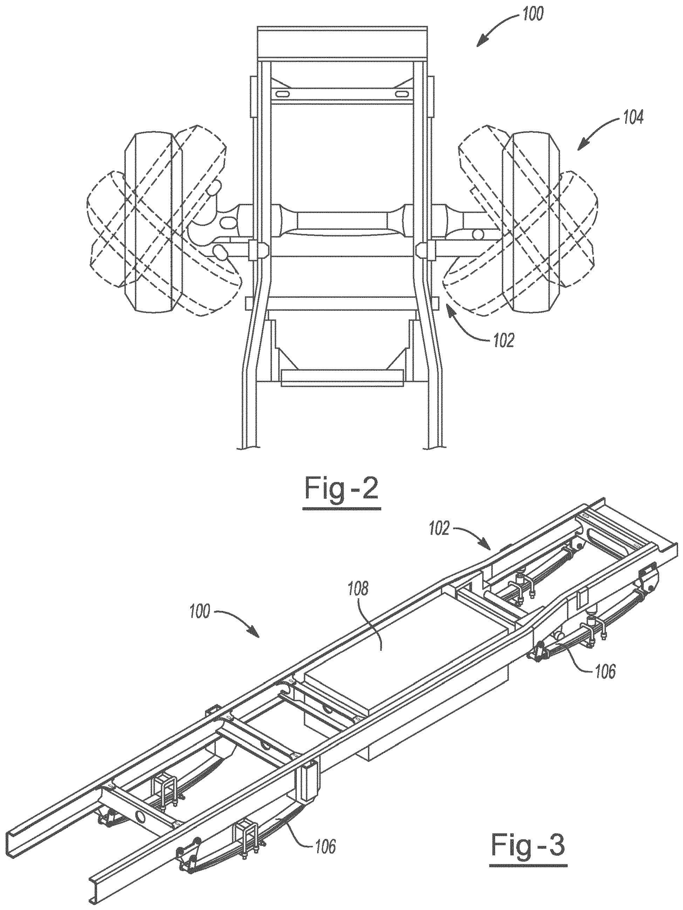

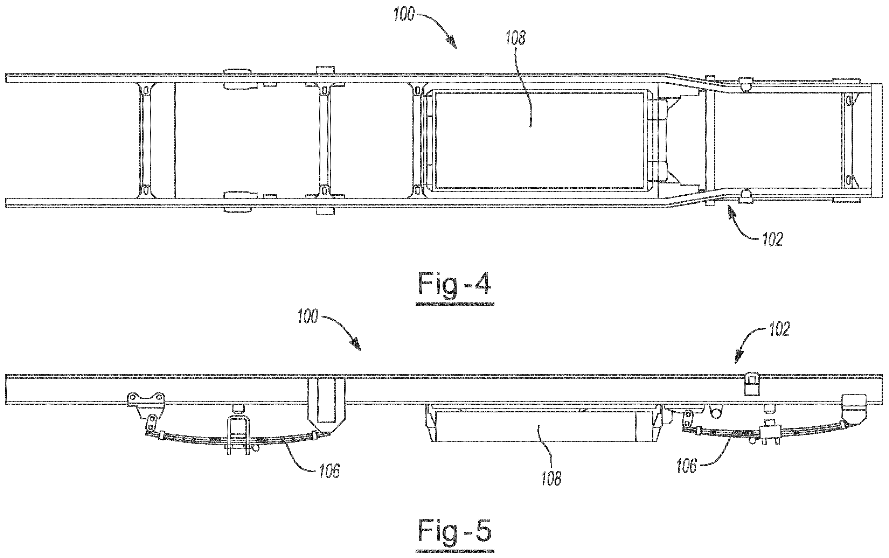

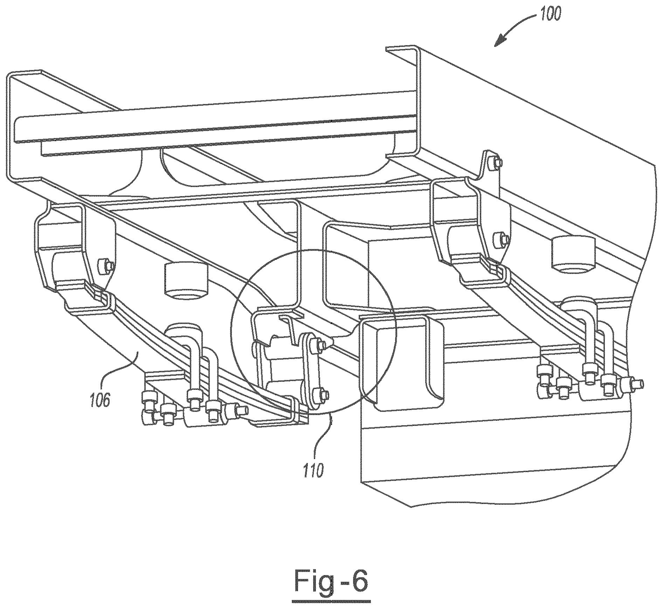

Figures 1-8 depict two embodiments (with and without return s-bend) of the unitary frame 100. The frame 100 generally includes an elongated unitary construction to improve resilience and strength of the overall chassis. In this first embodiment, the frame 100 includes 2 bends, or s-bends, 102 at a front section of the frame 100. The s-bends 102 enable a larger steering angle for the wheels 104 and springs 106 (connected at 110) as compared to prior designs. In additional embodiments as shown in Figures 10 and 11, a second s-bend may be provided (discussed in more detail in the following). The frame 100 is generally wider than the previous known design by between 4-6" to enable the battery packs 108 to mount between the frame rails. The frame 100 has a first width W₁ and a second width W₂ wherein W₁ is larger than W₂ in total width.

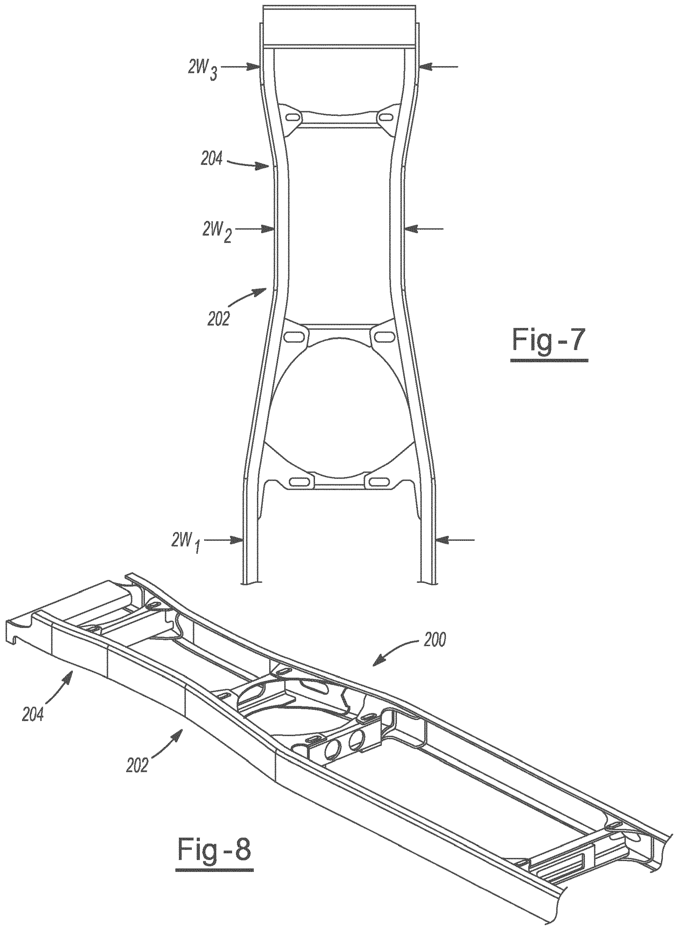

As shown in Figures 7 and 8, a frame 202 is provided with a plurality of s-bends 202 and 204. In this embodiment, the frame 200 has multiple widths defined by 2W₁, 2W₂, and 2W₃ where 2W₁ is larger than 2W₂, where 2W₃ is larger than 2W₂, and 2W₃ is smaller than or equal to 2W₁. In this embodiment, she s-bends 202, 204 enable a larger steering angle for the wheels and springs as compared to prior designs.

Although the embodiments of the present invention have been illustrated in the accompanying drawings and described in the foregoing detailed description, it is to be understood that the present invention is not to be limited to just the embodiments disclosed, but that the invention described herein is capable of numerous rearrangements, modifications and substitutions without departing from the scope of the claims hereafter. The claims as follows are intended to include all modifications and alterations insofar as they come within the scope of the claims or the equivalent thereof.

It is noted that the terms "substantially" and "about" may be utilized herein to represent the inherent degree of uncertainty that may be attributed to any quantitative comparison, value, measurement, or other representation.

These terms are also utilized herein to represent the degree by which a quantitative representation may vary from a stated reference without resulting in a change in the basic function of the subject matter at issue.

While particular embodiments have been illustrated and described herein, it should be understood that various other changes and modifications may be made without departing from the spirit and scope of the claimed subject matter.

Unless otherwise stated, any numerical values recited herein include all values from the lower value to the upper value in increments of one unit provided that there is a separation of at least 2 units between any lower value and any higher value. As an example, if it is stated that the amount of a component, a property, or a value of a process variable such as, for example, temperature, pressure, time and the like is, for example, from 1 to 90, preferably from 20 to 80, more preferably from 30 to 70, it is intended that intermediate range values such as (for example, 15 to 85, 22 to 68, 43 to 51, 30 to 32 etc.) are within the teachings of this specification. Likewise, individual intermediate values are also within the present teachings. For values which are less than one, one unit is considered to be 0.0001, 0.001, 0.01 or 0.1 as appropriate. These are only examples of what is specifically intended and all possible combinations of numerical values between the lowest value and the highest value enumerated are to be considered to be expressly stated in this application in a similar manner. As can be seen, the teaching of amounts expressed as "parts by weight" herein also contemplates the same ranges expressed in terms of percent by weight. Thus, an expression in the Detailed Description of the Invention of a range in terms of at "'x' parts by weight of the resulting polymeric blend composition" also contemplates a teaching of ranges of same recited amount of "x" in percent by weight of the resulting polymeric blend composition."

Unless otherwise stated, all ranges include both endpoints and all numbers between the endpoints. The use of "about" or "approximately" in connection with a range applies to both ends of the range. Thus, "about 20 to 30" is intended to cover "about 20 to about 30", inclusive of at least the specified endpoints.

The term "consisting essentially of" to describe a combination shall include the elements, ingredients, components, or steps identified, and such other elements ingredients, components or steps that do not materially affect the basic and novel characteristics of the combination. The use of the terms "comprising" or "including" to describe combinations of elements, ingredients, components, or steps herein also contemplates embodiments that consist essentially of, or even consist of the elements, ingredients, components or steps.

Plural elements, ingredients, components, or steps can be provided by a single integrated element, ingredient, component or step. Alternatively, a single integrated element, ingredient, component, or step might be divided into separate plural elements, ingredients, components or steps. The disclosure of "a" or "one" to describe an element, ingredient, component, or step is not intended to foreclose additional elements, ingredients, components or steps. All references herein to elements or metals belonging to a certain group refer to the Periodic Table of the Elements published and copyrighted by CRC Press, Inc., 1989. Any reference to the group or groups shall be to the group or groups as reflected in this Periodic Table of the Elements using the IUPAC system for numbering groups.

While particular embodiments have been illustrated and described herein, it should be understood that various other changes and modifications may be made without departing from the spirit and scope of the claimed subject matter.

Moreover, although various aspects of the claimed subject matter have been described herein, such aspects need not be utilized in combination.

It is therefore intended that the appended claims (and/or any future claims filed in any utility application) cover all such changes and modifications that are within the scope of the claimed subject matter.

Moreover, although various aspects of the claimed subject matter have been described herein, such aspects need not be utilized in combination.

It is therefore intended that the appended claims cover all such changes and modifications that are within the scope of the claimed subject matter.

## Claims

1. A unitary electric vehicle chassis comprising:
at least one s-bend aft of a front axle;
frame rails configured to accommodate battery packs mounted on isolators inside the frame rails;
an overall width of the frame, at its widest, being 4-6 inches wider than traditional non-electric vehicle frames;
said s-bend allowing for front wheel steering angles greater than if rails were straight.

2. The unitary electric vehicle chassis of claim 1, further comprising a second s-bend directing the frame outward to accommodate additional components and to increase the strength of the overall frame.

3. The unitary electric vehicle chassis of claim 1, wherein said second s-bend is positioned aft of said first s-bend.

4. The unitary electric vehicle chassis of any of claim 1, wherein the increased width of the frame facilitates the accommodation of battery packs required for operation of the electric vehicle.

5. The unitary electric vehicle chassis of any of claim 1, wherein the frame further comprises mounting provisions for rear springs underneath the frame rails for extra support and improved packaging efficiency.

6. The unitary electric vehicle chassis of any of claim 1, wherein a cross member is provided for front spring mounting to the frame.

7. A method of manufacturing a unitary electric vehicle chassis comprising:
forming at least one s-bend aft of a front axle;
configuring frame rails to accommodate battery packs mounted on isolators inside the frame rails;
widening the overall width of the frame, at its widest, by 4-6 inches compared to traditional non-electric vehicle frames;
incorporating said s-bend to allow for front wheel steering angles greater than if rails were straight.

8. The method of claim 7, further comprising forming a second s-bend directing the frame outward to accommodate additional components and to increase the strength of the overall frame.

9. The method of claim 7, wherein said second s-bend is positioned aft of said first s-bend.

10. The method of claim 7, further comprising facilitating the accommodation of battery packs required for operation of the electric vehicle due to the increased width of the frame.

11. The method of claim 7, further comprising providing mounting provisions for rear springs underneath the frame rails for extra support and improved packaging efficiency.

12. The method of any of claim 7, further comprising incorporating a cross member for front spring mounting to the frame.
